Europäisches Patentamt

European Patent Office

Office européen des brevets

(19)

(11) Numéro de publication: **0 036 379**

**A1**

(12)

# DEMANDE DE BREVET EUROPEEN

(21) Numéro de dépôt: **81420037.4**

(22) Date de dépôt: **17.03.81**

(51) Int. Cl.³: **H 02 K 7/108**
**F 16 K 31/04**

(30) Priorité: **19.03.80 FR 8007227**

(43) Date de publication de la demande.
**23.09.81 Bulletin 81/38**

(84) Etats contractants désignés:
**BE DE GB IT NL**

(71) Demandeur: **Chancerel, Jean-Claude**
**Lieudit "Drevaz" Route de Balmotte**
**F-74300 Chatillon sur Cluses(FR)**

(72) Inventeur: **Chancerel, Jean-Claude**
**Lieudit "Drevaz" Route de Balmotte**
**F-74300 Chatillon sur Cluses(FR)**

(74) Mandataire: **Monnier, Guy et al,**
**Cabinet Monnier 142-150 Cours Lafayette**
**F-69003 Lyon(FR)**

(54) **Moto-réducteur électrique pour la mécanisation des dispositifs de stores et de volets roulants à commande par manivelle.**

(57) L'invention a pour objet un moto-réducteur spécialement adapté pour assurer l'entraînement de la manivelle usuelle de commande des stores ou volets roulants. L'arbre (5) du moteur électrique (2) est relié à l'arbre de sortie (9) à travers un limiteur de couple (8) qui peut être réglé de façon à assurer l'immobilisation automatique dudit arbre à l'une des deux positions extrêmes du store ou volet par suite de la résistance exercée en fin de course. L'appareil est en outre muni d'un limiteur de course de sécurité constitué par un écrou migrateur (19) retenu angulairement et qui porte deux butées réglables coopérant avec des goupilles (22, 23) de l'arbre (9), ce limiteur de course opérant l'arrêt automatique à l'autre fin de course en liaison avec le limiteur de couple.

EP 0 036 379 A1

./...

_Fig.1_

Moto-réducteur électrique pour la mécanisation des dispositifs de stores et de volets roulants à commande par manivelle

La présente invention a trait aux moto-réducteurs électriques et elle a plus particulièrement pour objet un appareil de ce type spécialement adapté à assurer la mécanisation des dispositifs de stores et de volets roulants normalement commandés à l'aide d'un système d'actionnement à manivelle.

L'invention a également pour but de permettre la réalisation d'un moto-réducteur du genre susvisé qui soit susceptible d'être facilement monté et réglé par l'utilisateur lui-même, sans avoir recours à un spécialiste professionnel.

Le moto-réducteur suivant l'invention est caractérisé en ce qu'il comprend en combinaison d'une part un limiteur de course interposé à la façon connue entre le dernier pignon du système réducteur et l'arbre de sortie, et d'autre part un limiteur de course du type usuel à écrou migrateur et à butées réglables, associé à l'arbre de sortie précité de façon à ce que l'arrêt automatique soit assuré à l'une des fins de course par le limiteur de couple dont le seuil d'entraînement a été convenablement ajusté, à l'autre par ce limiteur de couple et par le limiteur de course moyennant un positionnement adéquat de l'une au moins des butées de celui-ci.

Le dessin annexé, donné à titre d'exemple, permettra de mieux comprendre l'invention, les caractéristiques qu'elle présente et les avantages qu'elle est susceptible de procurer :

Fig. 1 est une coupe verticale schématique montrant l'agencement général d'un moto-réducteur suivant l'invention.

Fig. 2 est une coupe axiale à plus grande échelle du limiteur de couple de l'appareil suivant fig. 1.

Fig. 3 illustre de la même manière le fonctionnement du mécanisme de sécurité en fins de course.

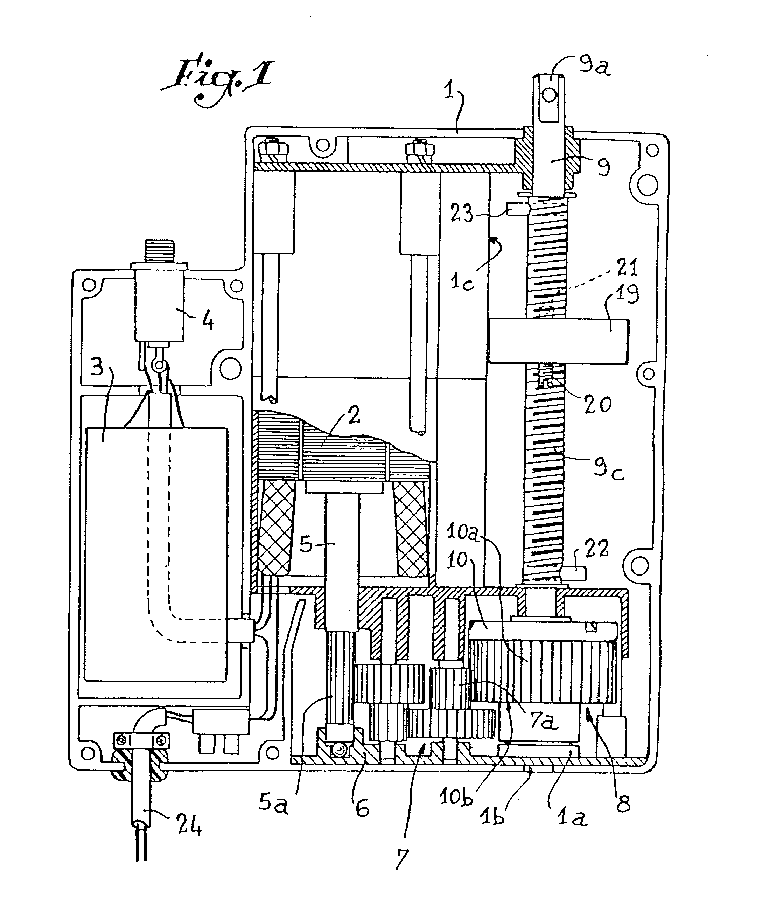

L'ensemble des organes électriques et mécaniques du moto-réducteur représenté en fig. 1 est monté à l'intérieur d'un
carter 1 formé par l'assemblage de deux demi-coquilles. Dans
un compartiment vertical de ce carter 1 est logé le moteur
électrique d'entraînement 2, préférablement du type asynchrone monophasé ; à ce moteur 2 est associé un condensateur de
déphasage 3 monté dans un compartiment latéral du carter
précité. La commande du sens de rotation et la mise en
marche du moteur 2 sont assurées à l'aide d'un inverseur 4
de type usuel, directement incorporé au compartiment latéral
sus-mentionné qui renferme le condensateur 3.

L'arbre 5 du moteur électrique 2 présente, au-dessus de la
crapaudine de soutien 6, une partie dentée 5a formant engrenage d'entrée pour un système réducteur 7. Le pignon de sortie
7a de ce système 7 est relié, par l'intermédiaire d'un
limiteur de couple globalement référencé 8 en fig. 1, à la
base d'un arbre de sortie 9 orienté parallèlement à l'arbre
5 du moteur 2. Cet arbre 9, convenablement supporté dans un
compartiment du carter 1, dépasse à son sommet au-dessus de
celui-ci, cette extrémité supérieure ou embout 9a étant
agencé pour être assemblé, à travers un mécanisme de cardan
non représenté, à la tige qui porte usuellement la manivelle des dispositifs de stores et de volets roulants à commande manuelle.

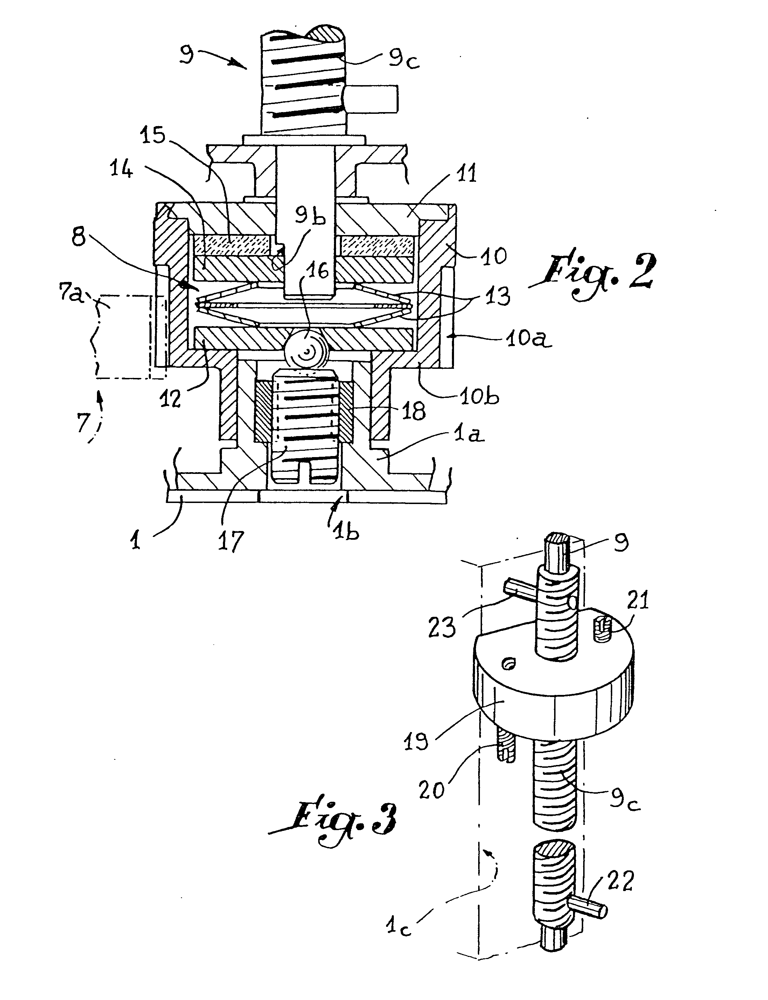

Comme illustré en fig. 2, le limiteur de couple 8 comprend
une douille 10 à axe vertical, dont la périphérie porte une
denture 10a qui engrène avec le pignon de sortie 7a sus-mentionné. La partie supérieure de la douille 10 est fermée par
un disque 11 fixé par sertissage et percé en son centre pour
permettre l'engagement de la base de l'arbre 9 à l'intérieur
de ladite douille. Contre un épaulement interne 10b de
celle-ci repose un plateau 12 formant appui pour un empilage
de rondelles élastiques 13 du genre Belleville ; cet empilage
13 est surmonté par un second plateau 14. Entre ce plateau
14 et le disque supérieur 11 est interposée une garniture de

0036379

friction 15 et l'on notera que si cette dernière est perforée pour permettre le passage et la libre rotation de l'extrémité inférieure de l'arbre 9, le plateau 14 comporte une perforation centrale profilée de manière à s'emboîter sans jeu sensible autour d'un méplat 9b ménagé en bout de l'extrémité précitée dudit arbre.

Le plateau inférieur 12 et la douille 10 qui renferme l'ensemble du limiteur de couple 8 sont supportés par une bille 16 prenant appui contre l'ouverture centrale dudit plateau. La bille 16 repose sur l'extrémité supérieure d'une vis verticale 17 engagée dans un écrou 18 retenu angulairement à l'intérieur d'un bossage tubulaire la du carter 1. On comprend dans ces conditions que la manoeuvre de la vis 17, accessible depuis l'extérieur à travers une ouverture 1b du carter 1, permet de modifier la pression exercée par l'empilage élastique 13 sur le plateau 14, la garniture 15 et le disque 11.

En fonctionnement normal le mouvement de rotation imparti à la douille 10 par le pignon 7a est transmis par la garniture 15 au plateau 14 qui entraîne alors l'arbre 9. Par contre, lorsque cet arbre 9 rencontre une résistance anormale, c'est-à-dire supérieure au couple maximal pour lequel le limiteur 8 a été ajusté à l'aide de la vis de manoeuvre 17, le plateau d'entraînement 14 patine contre la garniture 15, si bien que ledit arbre 9 peut rester angulairement immobile bien que l'arbre 5 et le système réducteur 7 continuent à être actionnés.

Comme plus particulièrement montré en fig. 3 l'arbre 9 présente un filetage 9c et supporte un écrou 19 ; celui-ci est immobilisé angulairement par contact contre une portée verticale plane 1c du carter 1, si bien que lorsque l'arbre 9 est entraîné en rotation, ledit écrou est obligé de se déplacer axialement le long dudit arbre. Cet écrou 19 porte deux butées réglables constituées par deux vis 20 et 21 opposées l'une à l'autre, propres à coopérer avec des goupilles 22, respectivement 23, solidaires radialement de l'arbre 9. L'ensemble 19-20-21-22-23 constitue, ainsi qu'on le verra plus loin, un limiteur de course formant sécurité.

Le fonctionnement et l'utilisation du moto-réducteur ci-dessus décrit se comprennent aisément.

L'opérateur, qui peut être l'utilisateur lui-même compte tenu de l'extrême simplicité de l'appareil et de son montage, fixe le moto-réducteur contre la paroi murale à une hauteur telle que la tige usuells du dispositif de store ou de volet roulant envisagé puisse être raccordée, à la place de la manivelle, à l'embout 9a à l'aide d'un mécanisme de cardan ou analogue. Le branchement électrique est effectué à l'aide du câble d'alimentation 24 (fig. 1) ; le moteur 2 comporte un double isolement de façon à ce que ce branchement puisse être réalisé sans précaution particulière et sans câblage préalable.

Le volet ou store étant en position basse, l'on manoeuvre l'inverseur 4 dans le sens de la montée. L'appareil ayant été livré avec le limiteur de couple 8 réglé à la position de couple minimal et l'écrou migrateur 19 disposé à l'une des extrémités de sa course, ce limiteur patine et il suffit à l'utilisateur, à l'aide d'un tournevis introduit dans l'ouverture 1b, de faire tourner la vis 17 au vissage jusqu'à ce que l'arbre 9 soit entraîné en rotation et que le store ou volet commence son mouvement de montée. Le réglage du seuil de fonctionnement du limiteur de couple 8 est très précis et l'on est ainsi assuré que le déplacement vertical du store ou volet sera automatiquement stoppé en fin de course haute de manière automatique par débrayage de l'arbre 9, et ce par suite de l'effort résistant supplémentaire qui s'exerce alors sur l'arbre 9.

Le limiteur de course 19-20-21-22-23 intervient en fin de course basse pour éviter l'écrasement des lames du volet ou l'enroulement inverse du store en toile. En effet la vis ou butée 20 ou 21 (en fonction du sens de rotation de l'arbre 9), convenablement réglée à l'origine, vient porter contre la goupille 22 (ou 23) ; l'arbre 9 est alors immobilisé, ce qui provoque à coup sûr le fonctionnement du limiteur de couple 8 et l'arrêt du fonctionnement.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents. On conçoit notamment que les butées ou vis 20 et 21 portées par l'écrou 19 peuvent être agencées de façon à pouvoir être aisément réglées par l'utilisateur lui-même, ce réglage pouvant également être effectué au niveau des goupilles 22 et 23.

Revendication de brevet

Moto-réducteur électrique pour la mécanisation des dispositifs de stores et de volets roulants à commande par manivelle, permettant l'arrêt automatique du store ou du volet aux deux extrémités de sa course, caractérisé en ce qu'il comprend en combinaison d'une part un limiteur de course (8) interposé à la façon connue entre le dernier pignon du système réducteur (7) et l'arbre de sortie (9), et d'autre part un limiteur de course (19-20-21-22-23) du type usuel à écrou migrateur et à butées réglables, associé à l'arbre de sortie précité de façon à ce que l'arrêt automatique soit assuré à l'une des fins de course par le limiteur de couple dont le seuil d'entraînement a été convenablement ajusté, à l'autre par ce limiteur de couple et par le limiteur de course moyennant un positionnement adéquat de l'une au moins des butées de celui-ci.

Fig.1

Fig. 2

Fig. 3

**0036379**

| Catégorie | Citation du document avec indication, en cas de besoin, des parties pertinentes | Revendica-tion concernée |
|---|---|---|
| | US - A - 2 678 661 (ROPER)<br><br>* Colonne 5, lignes 58-67; figure 2 *<br><br>--- | unique |
| | DE - B - 1 196 466 (LINDE)<br><br>* Colonne 4, lignes 5-20; figure 2 *<br><br>--- | unique |
| A | FR - A - 1 324 175 (BENDIX) | |
| A | DE - B - 1 257 466 (LINDE) | |
| A | DE - A - 1 927 741 (ENGLISH ELECTRIC) | |
| A | FR - A - 1 581 524 (ENGINS MATRA) | |
| A | FR - A - 1 440 692 (JORDAN) | |
| A | FR - A - 2 199 388 (ETAT FRANCAIS) | |

------

**DOCUMENTS CONSIDERES COMME PERTINENTS**

**CLASSEMENT DE LA DEMANDE (Int. Cl.³)**

H 02 K 7/108
F 16 K 31/04

**DOMAINES TECHNIQUES RECHERCHES (Int. Cl.³)**

H 02 K 7/108
F 16 K 31/04
H 02 K 7/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-06-1981 | RANDES |

OEB Form 1503.1 06.78